# EUROPEAN PATENT APPLICATION

(11) **EP 4 819 582 A1**
(43) Date of publication of application: **07.10.2026**
(21) Application number: 24905846.2
(22) Date of filing: 29.10.2024
(51) Int. Cl.: H04L 67/10

(54) **BLOCKCHAIN VERIFICATION SERVICE MANAGEMENT METHOD AND SYSTEM**

(30) Priority: 20.12.2023 CN 202311763697; 09.04.2024 CN 202410427496
(71) Applicant: Huawei Cloud Computing Technologies Co., Ltd., Gui'an New District, Guizhou 550025 (CN)
(72) Inventor: ZHANG, Ziyi, Guiyang, Guizhou 550025 (CN); QU, Qiang, Guiyang, Guizhou 550025 (CN)
(74) Representative: Huawei European IPR
(86) International application number: PCT/CN2024/128039
(87) International publication number: WO 2025/130358

(57) **Abstract**

This application provides a blockchain validation service management method and system. A blockchain includes a plurality of blockchain nodes. The blockchain validation service management system includes a plurality of shared nodes and a plurality of dedicated nodes. The shared nodes and the dedicated nodes are used as blockchain nodes. The shared nodes store synchronization data of the blockchain. The method includes: receiving a user node creation request from a first user, and creating at least one dedicated node based on data of a first shared node in the plurality of shared nodes, where the at least one dedicated node is used as a user node of the first user; receiving first data from a validation computing application of the first user; generating second data based on the first data, where the second data includes the first data, an identifier of the first user, and an identifier of the user node; and sending the second data to the plurality of blockchain nodes. The method and system can significantly improve validity of the user node in the blockchain.

## Description

This application claims priorities to Chinese Patent Application No. 202311763697.3, filed with the China National Intellectual Property Administration on December 20, 2023, entitled "BLOCKCHAIN STAKING METHOD AND SYSTEM", and to Chinese Patent Application No. 202410427496.4, filed with the China National Intellectual Property Administration on April 9, 2024, entitled "BLOCKCHAIN VALIDATION SERVICE MANAGEMENT METHOD AND SYSTEM", both of which are incorporated herein by reference in their entireties.

### TECHNICAL FIELD

This application relates to the field of cloud computing, and more specifically, to a blockchain validation service management method and system.

### BACKGROUND

Ethereum (Ethereum) is a smart contract platform based on blockchain technologies. A blockchain node in Ethereum may participate in staking and serve as a staking node. Specifically, an identity of a user of Ethereum may be validated through a validation computing client (validator client) to become a validation user. The validation user processes or validates transaction information on the platform, adds a new block to a blockchain, or verifies validity of a newly added block, and broadcasts, to another node in the blockchain through at least one blockchain node, data obtained by a validation computing application.

The user of Ethereum usually deploys a blockchain node, that is, a user node, in a user node pool of a cloud service system to accelerate validation computing, enhance a broadcast coverage speed, and improve average validity of a plurality of nodes. Because a validation computing service consumes a large quantity of compute resources, the user usually temporarily creates a user node when the user wants to participate in staking. However, it takes a long time to create the user node, and the user node may be in an unavailable state in a target period. In addition, in Ethereum, a software architecture of each node needs to be periodically maintained and upgraded to ensure that functions of the node are consistent with protocols in the entire blockchain. In a case where software architecture maintenance and upgrade of the user node occurs during execution of the validation computing service, the user node may also be in an unavailable state in the target period.

### SUMMARY

This application provides a blockchain validation service management method and system, to improve validity of a user node in a blockchain.

According to a first aspect, an embodiment of this application provides a blockchain validation service management method. A blockchain includes a plurality of blockchain nodes, the method is applied to a blockchain validation service management system, the blockchain validation service management system includes a plurality of shared nodes and a plurality of dedicated nodes, the shared nodes and the dedicated nodes are used as blockchain nodes, and the shared nodes store synchronization data of the blockchain. The method includes: receiving a user node creation request from a first user, and creating at least one dedicated node based on data of a first shared node in the plurality of shared nodes, where the at least one dedicated node is used as a user node of the first user; receiving first data from a validation computing application of the first user; generating second data based on the first data, where the second data includes the first data, an identifier of the first user, and an identifier of the user node; and sending the second data to the plurality of blockchain nodes.

The blockchain validation service management system provided in this embodiment of this application includes the plurality of shared nodes, and the shared nodes store the synchronization data of the blockchain, so that a creation speed of a user node can be improved, thereby improving validity of a user in performing a validation task.

In a possible implementation of the first aspect, generating the second data based on the first data includes: In a process in which the second data is generated, if the user node is available, the user node generates the second data based on the first data.

In a possible implementation of the first aspect, generating the second data based on the first data includes: In the process in which the second data is generated, if there is a first period in which the user node is unavailable, the first shared node generates one part of the second data based on the first data in the first period; and in a second period in which the user node is available, the user node generates another part of the second data based on the first data, where the second data includes the first data, the identifier of the first user, the identifier of the user node, and an identifier of the first shared node.

In such an implementation, the first shared node may temporarily replace the unavailable user node to perform the validation computing service. Regardless of whether the user node is available, the entire blockchain validation service management system may continuously receive the first data, thereby improving broadcast efficiency and reliability of the first data.

In a possible implementation of the first aspect, that the user node is unavailable includes: The user node is in a creation process, or the user node is in an upgrade and maintenance process.

The technical solutions in embodiments of this application cover a plurality of cases in which the user node is unavailable, and the blockchain validation service management system is stable and reliable.

In a possible implementation of the first aspect, the blockchain validation service management system further includes a validation computing application interface, and receiving the first data from the validation computing application of the first user includes: The validation computing application interface receives the first data from the validation computing application. The method further includes: If the user node is available, the validation computing application interface sends the first data to the user node; or if the user node is unavailable, the validation computing application interface sends the first data to the first shared node.

The validation computing application interface is deployed in the blockchain validation computing service management system, so that the validation computing application does not need to perform complex computation to determine a node used to receive the first data, and the first shared node does not need to perform complex computation to determine whether each period is used to receive the first data, thereby reducing complexity of the entire system.

In a possible implementation of the first aspect, the plurality of shared nodes are deployed in a plurality of regions, and sending the second data to the plurality of blockchain nodes includes: sending the second data to a second shared node, where the second shared node is a shared node located in a same region as the user node; and the second shared node sends the second data to the plurality of blockchain nodes.

In such an implementation, the user node may broadcast the second data in the local region through the shared node in the same region.

In a possible implementation of the first aspect, that the second shared node sends the second data to the plurality of blockchain nodes includes: The second shared node sends the second data to a third shared node in a region to which a target blockchain node belongs; and the third shared node sends the second data to the target blockchain node.

In this implementation, the shared node is configured to broadcast validation data to an external blockchain node, thereby increasing a broadcast coverage area, reducing a broadcast delay, reducing traffic consumption of the user node, and significantly improving a success rate of executing a validation computing task by the user node.

In a possible implementation of the first aspect, the blockchain validation service management system further includes the validation computing application interface, and that the second shared node sends the second data to the plurality of blockchain nodes includes: The second shared node sends the second data to the plurality of blockchain nodes through the validation computing application interface.

In such an implementation, the user node can fully utilize network performance between a plurality of validation computing application interfaces to broadcast the second data to the plurality of shared nodes, thereby reducing a delay of internally broadcasting the second data.

In a possible implementation of the first aspect, the blockchain validation service management system further includes a human-machine interaction interface, the human-machine interaction interface is configured to deploy the plurality of shared nodes and the plurality of dedicated nodes, and the method includes: The human-machine interaction interface receives the user node creation request from the first user; and outputs a creation success response to the first user when creation of the user node is completed.

The human-machine interaction interface may receive the user node creation request from the user, or receive configuration information set by an administrator, so that the blockchain validation service management system is easy to maintain.

According to a second aspect, an embodiment of this application provides a blockchain validation service management system. A blockchain includes a plurality of blockchain nodes, the blockchain validation service management system includes a plurality of shared nodes and a plurality of dedicated nodes, the shared nodes and the dedicated nodes are used as blockchain nodes, and the shared nodes store synchronization data of the blockchain. The blockchain validation service management system is configured to: receive a user node creation request from a first user, and create at least one dedicated node based on data of a first shared node in the plurality of shared nodes, where the at least one dedicated node is used as a user node of the first user; receive first data from a validation computing application of the first user; generate second data based on the first data, where the second data includes the first data, an identifier of the first user, and an identifier of the user node; and send the second data to the plurality of blockchain nodes.

In a possible implementation of the second aspect, in a process in which the second data is generated, if the user node is available, the user node is configured to generate the second data based on the first data.

In a possible implementation of the second aspect, in the process in which the second data is generated, if there is a first period in which the user node is unavailable, the first shared node is configured to generate one part of the second data based on the first data in the first period; and in a second period in which the user node is available, the user node is configured to generate another part of the second data based on the first data, where the second data includes the first data, the identifier of the first user, the identifier of the user node, and an identifier of the first shared node.

In a possible implementation of the second aspect, that the user node is unavailable includes: The user node is in a creation process, or the user node is in an upgrade and maintenance process.

In a possible implementation of the second aspect, the blockchain validation service management system further includes a validation computing application interface, and the validation computing application interface is configured to: receive the first data from the validation computing application; and if the user node is available, send the first data to the user node; or if the user node is unavailable, send the first data to the first shared node.

In a possible implementation of the second aspect, the plurality of shared nodes are deployed in a plurality of regions, the user node and/or the first shared node are/is configured to send the second data to a second shared node, where the second shared node is a shared node located in a same region as the user node; and the second shared node is configured to send the second data to the plurality of blockchain nodes.

In a possible implementation of the second aspect, the second shared node is configured to send the second data to a third shared node in a region to which a target blockchain node belongs; and the third shared node is configured to send the second data to the target blockchain node.

In a possible implementation of the second aspect, the blockchain validation service management system further includes the validation computing application interface, and the second shared node is configured to send the second data to the plurality of blockchain nodes through the validation computing application interface.

In a possible implementation of the second aspect, the blockchain validation service management system further includes a human-machine interaction interface, the human-machine interaction interface is configured to: deploy the plurality of shared nodes and the plurality of dedicated nodes; and output a creation success response to the first user when creation of the user node is completed.

According to a third aspect, an embodiment of this application provides a compute device cluster, including at least one compute device, where each compute device includes a processor and a memory, and the processor of the at least one compute device is configured to execute instructions stored in the memory of the at least one compute device, so that the compute device cluster performs the method according to any one of the implementations of the first aspect.

According to a fourth aspect, an embodiment of this application provides a computer-readable storage medium, including computer program instructions. When the computer program instructions are executed by a blockchain validation service management system, the blockchain validation service management system is enabled to perform the method according to any one of the implementations of the first aspect.

According to a fifth aspect, an embodiment of this application provides a computer program product. When the computer program product is run on a blockchain validation service management system, the blockchain validation service management system is enabled to perform the method according to any one of the implementations of the first aspect.

### BRIEF DESCRIPTION OF DRAWINGS

FIG. 1 is a diagram of an application scenario according to an embodiment of this application;
FIG. 2 is a block diagram of a blockchain validation service management system according to an embodiment of this application;
FIG. 3 is a block diagram of a blockchain validation service management system according to an embodiment of this application;
FIG. 4 is a block diagram of a human-machine interaction interface of a blockchain validation service management system according to an embodiment of this application;
FIG. 5 is a schematic flowchart of a blockchain validation service management method according to an embodiment of this application;
FIG. 6A and FIG. 6B are a schematic flowchart of receiving validation data according to an embodiment of this application;
FIG. 7 is a block diagram of validating a data application interface according to an embodiment of this application;
FIG. 8A and FIG. 8B are a schematic flowchart of sending second data by a user node to a second shared node according to an embodiment of this application;
FIG. 9 is a block diagram of a blockchain staking apparatus according to an embodiment of this application; and
FIG. 10 is a block diagram of a controller according to an embodiment of this application.

### DESCRIPTION OF EMBODIMENTS

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "for example" and "such as" are used to represent giving an example, an illustration, or description. Any embodiment or design scheme described as an "example" in this application should not be explained as being more preferred or having more advantages than another embodiment or design scheme. Specifically, the term "example" is used for presenting a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

This embodiment relates to some new functional modules or units divided based on functions or logic, for example, a validation computing application interface (validating hub, VH) and a submodule of the validation computing application interface. A person of ordinary skill in the art may know that, with the evolution of network architectures and the emergence of new service scenarios, modules or units with similar functions and definitions may have different names, and the different names should not be considered as a limitation on the technical solutions of this application.

A service scenario described in embodiments of this application is intended to describe the technical solutions in embodiments of this application more clearly, and does not constitute a limitation on the technical solutions provided in embodiments of this application. A person of ordinary skill in the art may know that with the evolution of the network architecture and the emergence of a new service scenario, the technical solutions provided in embodiments of this application are also applicable to similar technical problems.

The following briefly describes common technical terms in this field.

Cloud computing (cloud computing) is a computing mode in which dynamically scalable virtualized resources are provided in a form of a service through a network. Platform as a service (platform as a service, PaaS) is one of main modes of multi-tenant cloud computing. On a PaaS platform, different tenants are registered to use resources and services on the PaaS platform. A public cloud service of the PaaS platform can provide blockchain as a service (blockchain as a service, BaaS) for public cloud tenants.

In the field of cloud computing, a region (region) and an availability zone (availability zone, AZ) are concepts used to divide data centers and server resources. A region is a geographical region that usually contains a plurality of data centers, and each data center contains a plurality of AZs. Each AZ is usually an independent data center with power supply, network, and physical devices of the AZ. For example, global regions can be divided into Asia, Americas, and Europe, and regions in China can be divided into East China, North China, Central China, and the like.

A blockchain (blockchain) is a distributed database technology in which a plurality of nodes in a peer-to-peer network jointly maintain a continuously growing chain list ledger constructed by timestamps and ordered data blocks through a consensus mechanism manner designed based on cryptography technologies. In this technical solution, any plurality of blockchain nodes participating in a blockchain compute and record, by using a cryptographic algorithm, data of all information exchange in a system in a period of time into a data block (block), and generate a fingerprint of the data block, to chain (chain) and validate a next data block. All nodes in the system jointly validate authenticity and validity of the data.

A block height (block height) is a height of a latest block confirmed on a blockchain network. Each time a new block is added to the blockchain, the block height increases. Therefore, the block height may indicate a current status and progress of the blockchain network. When a node is running normally and is synchronized with the blockchain network, the node continuously receives new blocks and updates a block height of the node. Therefore, whether a node is running normally and is synchronized with the network may be determined by checking a block height of the node. If a node does not update a block height of the node for a long time or the block height of the bode deviates significantly from a block height of another node, it may indicate that the node is faulty, cannot run normally, or is disconnected from the network. In other words, the node is in an unavailable state.

A general-purpose PoS chain is a blockchain network based on a proof of stake (proof of stake, PoS) consensus mechanism, and a main feature of the general-purpose PoS chain is that the general-purpose PoS chain can support a plurality of types of applications and smart contracts. Ethereum (Ethereum) is a public blockchain platform based on the general-purpose PoS chain. In Ethereum, a new block is generated in each slot. A blockchain node in Ethereum may participate in staking and serve as a staking node. Specifically, a user of Ethereum has a digital signature, a validation computing client, and a plurality of validation nodes, and an identity may be validated through a validation computing client (validator client) to become a validation user. Then, the validation user processes or validates transaction information on the platform through a plurality of validation computing applications (validator) in the validation computing client, adds a new block to the blockchain, or verifies validity of the newly added block, and broadcasts, to another node in the blockchain through at least one blockchain node, data obtained by the validation computing application.

In this embodiment of this application, the user participating in staking may be referred to as a validation user or a staking user, participating in staking may be referred to as executing a validation service, data obtained through processing or validation may be referred to as staking data or validation data, a node that executes the validation service may be referred to as a staking node or a user node, and the validation computing application may be referred to as a validator. Mixed use of specific names should not be construed as a limitation on the technical solutions of this application. In subsequent embodiments, Ethereum is used as an example to describe a method, an apparatus, a system, and the like applied to a general-purpose PoS chain. This should not be construed as a limitation on the technical solutions of this application.

Specifically, a rule for selecting a staking node in Ethereum is determined through randomness. The RANDAO algorithm is used in Ethereum to achieve randomness. In this algorithm, a hash value from a block proposer is combined with a seed (seed) that is updated with each block to generate a random number, and this random number is used to select a specific staking node from all staking nodes to perform the validation service. Therefore, activities in a blockchain system usually involve global regions.

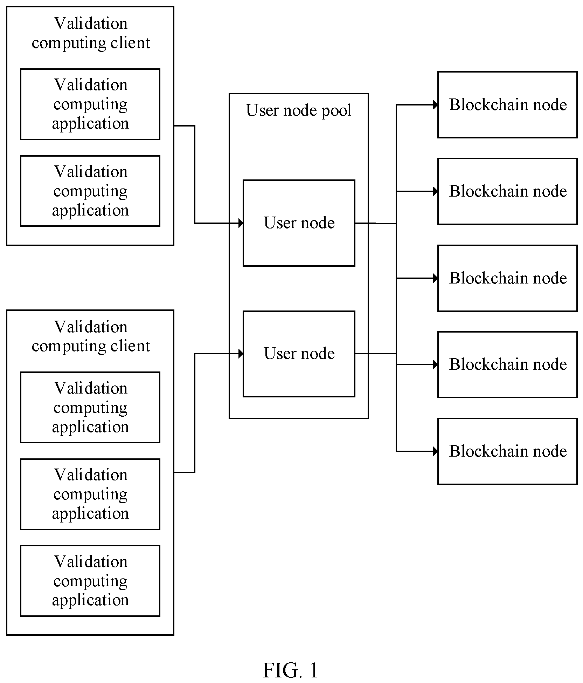

Specifically, a blockchain node may be hardware, virtual hardware, or a container, and each blockchain node has an IP address and a digital signature. As shown in FIG. 1, a plurality of validation computing clients may obtain latest data of a current blockchain from at least one arbitrary node in the blockchain, perform specific validation computing, and send validation data to a plurality of user nodes. The plurality of user nodes separately broadcast the validation data to most nodes in the blockchain, to prove validity of staking. One validation user may deploy one validation computing client for each user node, and each validation computing client includes a plurality of validation computing applications that can perform parallel computation, to accelerate a validation computing speed.

The user of Ethereum usually deploys a blockchain node, that is, a user node, in a user node pool of a cloud service system to accelerate validation computing, enhance a broadcast coverage speed, and improve average validity of a plurality of nodes. Because a validation computing service consumes a large quantity of compute resources, the user usually temporarily creates a user node when the user wants to participate in staking. However, it takes a long time to create the user node, and the user node may be in an unavailable state in a target period. In addition, in Ethereum, a software architecture of each node needs to be periodically maintained and upgraded to ensure that functions of the node are consistent with protocols in the entire blockchain. In a case where software architecture maintenance and upgrade of the user node occurs during execution of the validation computing service, the user node may also be in an unavailable state in the target period.

Further, if all user nodes are located in a same region, a network delay for broadcasting data to another region may be high, and data transmission traffic may be low. As a result, a message loss (miss) occurs on most nodes in the another region in a current slot, causing a plurality of validation task failures and low validity of the nodes in the blockchain. In addition, the user node needs to broadcast validation data to all nodes in the blockchain in each slot, resulting in high traffic consumption.

In view of this, an embodiment of this application provides a blockchain validation service management method and system, to improve validity of a user node in a blockchain.

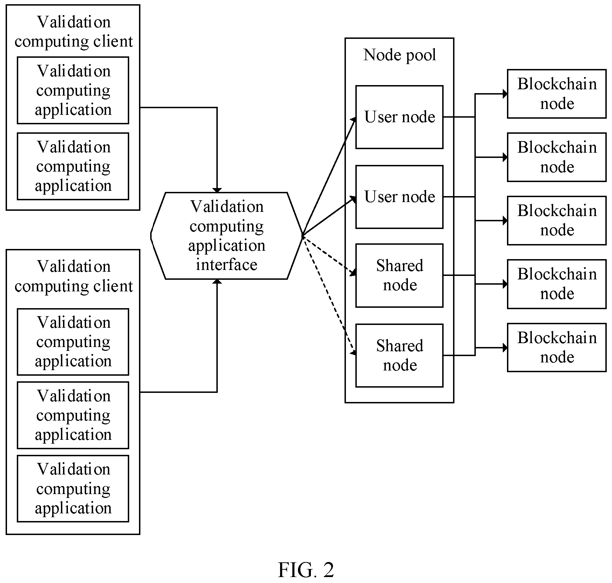

The following describes, with reference to FIG. 2, a blockchain validation service management system provided in this application. As shown in FIG. 2, a blockchain includes a plurality of blockchain nodes, a blockchain validation service management method is applied to the system, a node pool of the blockchain validation service management system includes a plurality of shared nodes and a plurality of user nodes, and the shared nodes and the user nodes are used as blockchain nodes. Each shared node pool periodically synchronizes blockchain data in an external blockchain node, and stores the blockchain data in a storage device of the shared node pool.

In some embodiments, a validation computing client does not directly send validation data to the user node, but sends the validation data to a validation computing application interface. When the user node is available, the validation computing application interface sends the validation data to the user node. When the user node is unavailable, for example, the user node is in a creation process or in an upgrade and maintenance process, the validation computing application interface sends the validation data to a shared node, and the shared node is used as the user node. In addition, latest blockchain data may be directly obtained from the shared node to initialize the user node, thereby improving a creation speed of the user node.

The blockchain validation service management system provided in this embodiment of this application includes the plurality of shared nodes, and the shared nodes store the synchronization data of the blockchain, so that a creation speed of a user node can be improved, thereby improving validity of a user in performing a validation task.

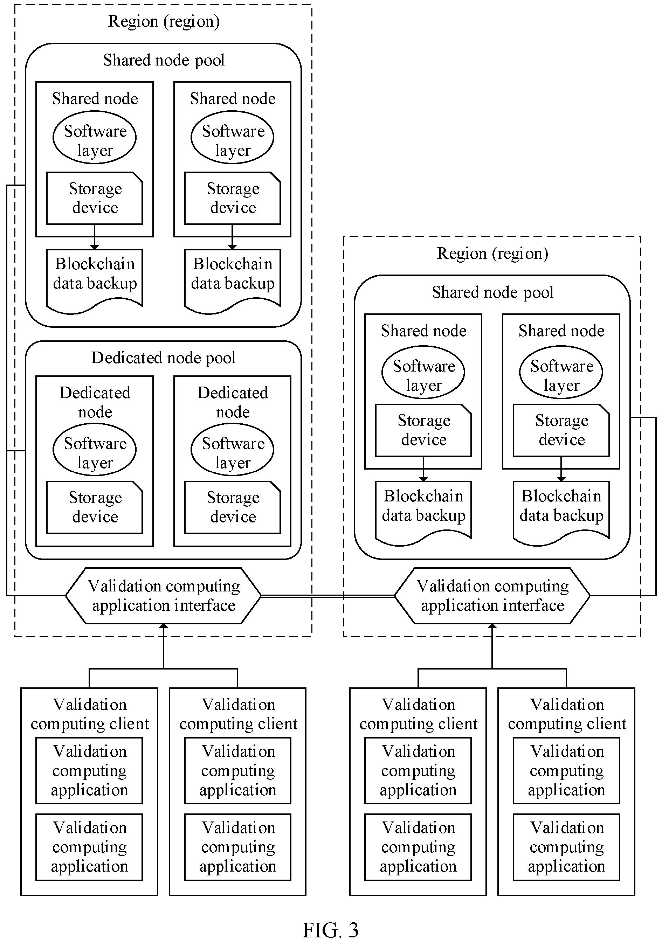

The foregoing solution is applicable to a scenario in which a single node pool is established in a region to which a user node belongs. The solution may also be further extended to a scenario in which a plurality of node pools are established in a plurality of regions, to improve availability of user nodes in the plurality of regions and more accurately manage the user nodes and the shared nodes. With reference to a block diagram of a blockchain validation service management system shown in FIG. 3, the following describes a logical relationship between some entities in the blockchain validation service management system in this embodiment.

This embodiment provides a blockchain validation service management system, and data centers are disposed in a plurality of regions. It should be understood that the region in this application mainly refers to a region within a global range. An administrator of the blockchain validation service management system may perform configuration in the system, and create a plurality of blockchain nodes in a plurality of hosts/virtual machines/containers in each region. The blockchain node may be a virtual machine/container, and is deployed in the data center. Specifically, the blockchain nodes in this embodiment may be classified into shared nodes and dedicated nodes. A plurality of shared nodes are deployed in a data center in each region, and a plurality of dedicated nodes are deployed in a data center in at least one region. Both the shared node and the dedicated node include a software layer and a storage device, and the dedicated node includes a software layer and a dynamic capacity storage device.

Further, all shared nodes in each region are separately collected to form a shared node pool in each region, and all dedicated nodes in each region are collected to form a dedicated node pool in at least one region.

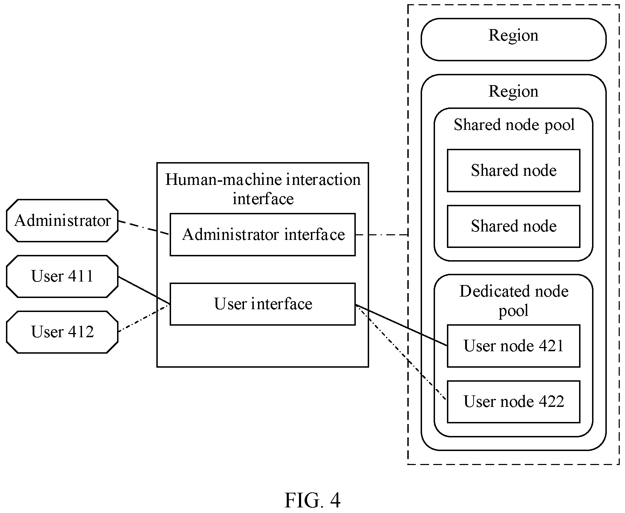

In an embodiment, as shown in FIG. 4, the blockchain validation service management system includes a human-machine interaction interface, and the human-machine interaction interface includes an administrator interface. The administrator of the blockchain validation service management system may deploy a shared node pool and a dedicated node pool through the administrator interface, or manage a shared node pool and a dedicated node pool deployed in each region. Specifically, a division manner of the regions may be changed, a quantity of shared nodes or dedicated nodes may be adjusted, and a memory resource, a storage capacity, network bandwidth, or the like of a node may be set.

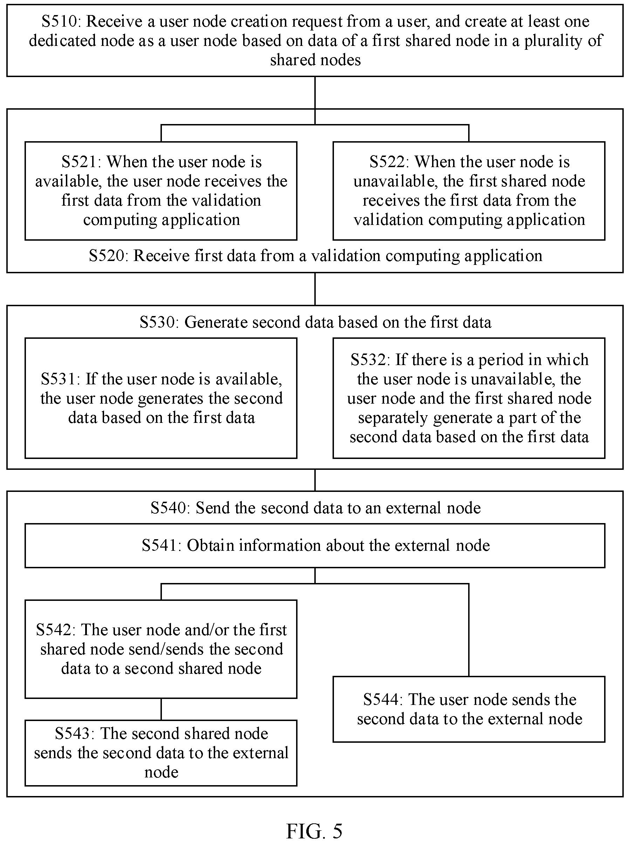

The following describes a procedure of a blockchain validation service management method with reference to a schematic flowchart shown in FIG. 5.

S510: Receive a user node creation request from a user, and create at least one dedicated node as a user node based on data of a first shared node in a plurality of shared nodes.

When the user wants to create a user node and participate in staking of the blockchain, the user requests to create the user node in the blockchain validation service management system. The blockchain validation service management system creates a dedicated node in a dedicated node pool of at least one region as a user node. In other words, the dedicated node pool may include user nodes of a plurality of different users.

It should be understood that each node in the blockchain periodically obtains latest blockchain data at a current moment from another node, and stores synchronization data of the blockchain, to ensure data consistency between the nodes. This synchronization data periodicity may be described by using a period (period) and a slot (slot). Specifically, one period includes a plurality of slots. According to a protocol of the blockchain, some data needs to be synchronized in each slot, and other data needs to be synchronized only in each period. Each node needs to perform synchronization at least once in each period.

For ease of description, in this application, the shared node or the dedicated node in the blockchain validation service management system is referred to as an internal node, and another blockchain node outside the blockchain validation service management system is referred to as an external node. In addition, in subsequent embodiments, an example in which duration of one period is 384 seconds and duration of one slot is 12 seconds is used for description.

In the blockchain validation service management system, each shared node pool periodically synchronizes blockchain data in an external node. Each node in the shared node pool has a same data synchronization periodicity, but has different data synchronization moments. In an embodiment, a synchronization periodicity of a shared node pool is duration of one period, that is, 384 seconds. A part of shared nodes perform synchronization at a (384*K+12)^{th} second, a part of shared nodes perform synchronization at a (384*K+24)^{th} second, and a part of shared nodes perform synchronization at a (384*K+36)^{th} second, where K is a natural number. The rest may be deduced by analogy. When a quantity of shared nodes in the shared node pool is greater than or equal to 32, data of at least one shared node in the shared node pool is consistent with latest blockchain data of the external node in the current slot, and these shared nodes store latest synchronization data of the blockchain. These shared nodes are referred to as first shared nodes.

Optionally, each time data synchronization is performed, the shared node may store successfully obtained blockchain data into a backup data memory, to further improve data security.

In an embodiment, the blockchain validation service management system creates a user node at a (384*K+15)^{th} second, and the user node may be initialized based on blockchain data at the (384*K+12)^{th} second in the shared node pool of the current region.

A plurality of shared nodes in the shared node pool synchronize blockchain data in different slots of a blockchain period. The blockchain validation service management system may create a user node based on latest blockchain data in the shared node pool in the current region, so that an initialization operation has a low delay and high validity.

In an embodiment, as shown in FIG. 4, the human-machine interaction interface of the blockchain validation service management system includes a user interface. The user may initiate a user node creation request through the user interface, perform upgrade and maintenance on the user node, view a log, or access the user node to view various information in the blockchain. Each user manages a user node of the user. For example, a user 411 may manage a user node 421, and a user 412 may manage a user node 422.

Further, the blockchain validation service management system outputs a creation success response to the user when creation of the user node is completed.

The human-machine interaction interface may receive the user node creation request from the user, or receive configuration information set by an administrator, so that the blockchain validation service management system is easy to maintain.

S520: Receive first data from a validation computing application.

In an embodiment, a validation computing application interface (validating hub, VH) is deployed in the blockchain validation service management system. The VH may be configured to: receive the first data from the validation computing application, send the first data to the user node and/or the first shared node, and receive data from the validation computing application interface, or send data to the validation computing application interface.

Specifically, the VH is a module having a high-performance network communication component, and may forward heavy-traffic data, for example, simultaneously receive first data from a plurality of validation computing clients and forward the first data to a specified internal node. It should be understood that the foregoing components and modules are merely logical divisions, and may be software, hardware, or a combination of software and hardware.

It should be understood that the validation computing application in the validation computing client needs to obtain latest blockchain data for validation computing. In an embodiment, the validation computing client may obtain blockchain data from an internal node in the region to which the VH belongs through the VH. In another embodiment, the validation computing client may obtain blockchain data through an external node to which a connection is established. For ease of description, the validation computing application and the validation computing client are not distinguished in subsequent embodiments, and are collectively referred to as the validation computing application for description.

In this embodiment of this application, a persistent connection is established between the validation computing application and the VH, and the VH provides high reliability for the persistent connection. A persistent connection refers to a connection that remains active for a period of time after being established between two communication parties and allows for a plurality of data transmissions. In the persistent connection, once the connection is established, both communication parties can send and receive data at any time without re-establishing a connection for each communication.

For ease of description, a connection between the validation computing application and the VH is referred to as an external connection, and a connection between the internal node and the VH is referred to as an internal connection.

S521: When the user node is available, the user node receives the first data from the validation computing application.

In the foregoing embodiment, a process of creating a user node takes several minutes. If the first user node is in a state in which creation is not completed, it is considered that the first user node is in an unavailable state. In addition, if the software layer of the first user node is being maintained and upgraded, it is also considered that the first user node is in an unavailable state.

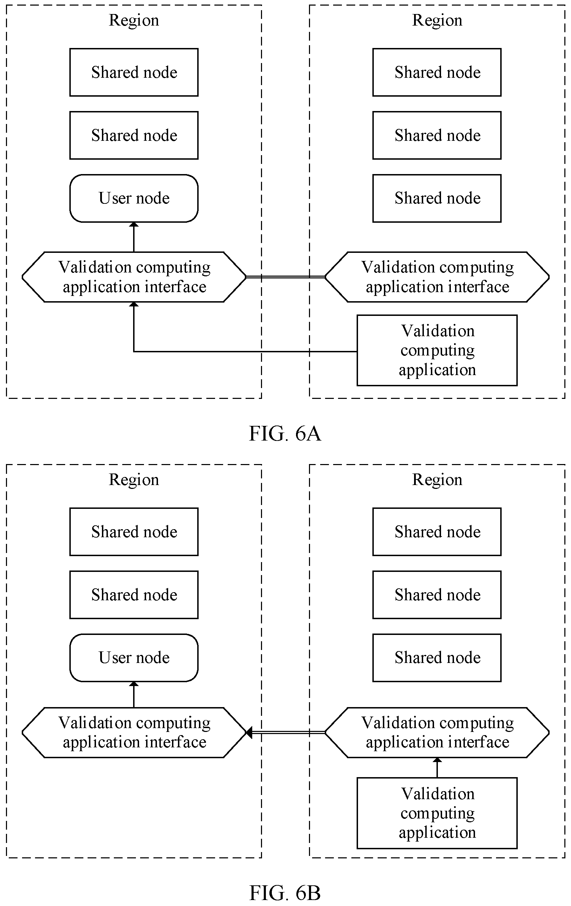

For ease of description, a VH located in a same region as the validation computing application is referred to as a first validation computing application interface, and a VH located in a same region as the user node is referred to as a second validation computing application interface. The following describes in detail receiving of the first data with reference to a schematic flowchart shown in FIG. 6A and FIG. 6B.

In an embodiment, as shown in FIG. 6A, the second validation computing application interface receives the first data from the validation computing application, and the second validation computing application interface sends the first data to the first user node.

In an embodiment, as shown in FIG. 6B, the first validation computing application interface receives the first data from the validation computing application, the second validation computing application interface receives the first data from the first validation computing application interface, and the second validation computing application interface sends the first data to the first user node.

In this implementation, network quality between the validation computing application and the first validation computing application interface is high, so that network performance between a plurality of validation computing application interfaces can be fully utilized, and a rate of sending the first data internally is improved.

In the foregoing embodiment, when the first user node is available, the VH sends the first data to the first user node. However, in some embodiments, when the first user node is in an available state, the first user node receives the first data directly sent by the validation computing application to the first user node. The VH in the blockchain validation service management system is optional.

S522: When the user node is unavailable, the first shared node receives the first data from the validation computing application.

In some embodiments, the shared node pool in each region includes at least one first shared node, and the first shared node may be used as a second user node. Specifically, when the second user node is in an unavailable state, a VH located in a same region as the second user node analyzes working statuses of all shared nodes in the region, selects a first shared node according to a specific rule, and switches network traffic for transmitting the first data from the unavailable second user node to the first shared node, so that the first shared node receives the first data in place of the second user node, and performs other functions of the second user node, for example, synchronizing blockchain data and accessing a blockchain browser for a user.

Specifically, the first shared node is selected according to a specific rule. For example, a first shared node with lowest current workload may be selected from all first shared nodes in the current region, where the workload includes parameters such as memory usage and network traffic usage. Alternatively, a first shared node that is located in a same AZ as the user node may be selected. Alternatively, a first shared node that is in the current region and has high validity in the blockchain may be selected. Alternatively, a first shared node may be selected based on block heights of a plurality of shared nodes. This is not limited in this embodiment.

In the foregoing embodiment, when the second user node is unavailable, the VH sends the first data to the first shared node. However, in some embodiments, when the second user node is in an unavailable state, the first shared node receives the first data directly sent by the validation computing application to the first shared node. The VH in the blockchain validation service management system is optional.

Further, whether the second user node is available may be determined according to a method for detecting a block height.

Further, the VH may switch, according to methods such as a message queue (message queue), heartbeat detection (heartbeat detection), and service registration and discovery (service registration and discovery), network traffic for transmitting the first data from the unavailable user node to the first shared node.

It should be understood that a process in which the validation computing application sends the first data to the first shared node is similar to a process in which the validation computing application sends the first data to the first user node.

It should be understood that, when the second user node is available, the VH may switch the network traffic for transmitting the first data from the first shared node to the second user node, to enable the second user node to continue to receive the first data.

In some embodiments, if no VH is disposed in the blockchain validation service management system, steps such as selecting the first shared node, determining whether the second user node is available, and switching network traffic may be implemented by another network management system deployed by the user.

In some embodiments, when the second user node is available, the first shared node may also receive the first data from the validation computing application. For example, if network bandwidth of the second user node is small, or the compute resources are few, it takes a long time for the second user node to independently complete the validation computing task. There are a large quantity of idle first shared nodes, and the first shared node may also jointly execute the validation computing task with the second user node.

The validation computing application interface is deployed in the blockchain validation computing service management system, so that the validation computing application does not need to perform complex computation to determine a node used to receive the first data, and the first shared node does not need to perform complex computation to determine whether each period is used to receive the first data, thereby reducing complexity of the entire system.

In such an implementation, the first shared node may temporarily replace the unavailable user node to perform the validation computing service. Regardless of whether the user node is available, the entire blockchain validation service management system may continuously receive the first data, thereby improving broadcast efficiency and reliability of the first data.

S530: Generate second data based on the first data.

The first data is data obtained by the validation computing application of the user, including a digital signature of the user but excluding a digital signature of the blockchain node. The user node needs to send the first data to the user node for further conversion and processing to generate the second data, for example, appending a digital signature of the user node or modifying a timestamp, and then broadcast the second data to most nodes in the blockchain.

Specifically, the first data may be to-be-validated data generated in the blockchain system, for example, an input parameter of a smart contract, a transaction request, or other related information. The second data may be result data obtained through computation, validation, or processing, for example, an execution result of the smart contract, transaction confirmation information, or other related data, and is used to update a status of the blockchain network or execute logic of the smart contract.

S531: If the user node is available, the user node generates the second data based on the first data.

It should be understood that each blockchain node has a corresponding digital signature. If the user node is available in an entire process of generating the second data, the finally obtained second data includes the digital signature of the user and the digital signature of the user node. It should be understood that the digital signature is a type of identifier.

S532: If there is a period in which the user node is unavailable, the user node and the first shared node separately generate one part of the second data based on the first data.

Specifically, in the process in which the second data is generated, if there is a first period in which the user node is unavailable, the first shared node generates one part of the second data based on the first data in the first period; and in a second period in which the user node is available, the user node generates another part of the second data based on the first data. The second data includes the digital signature of the user node and a digital signature of the first shared node.

S540: Send the second data to an external node.

In this embodiment, the user node is used as an example to describe a process of sending the second data to the external node. It should be understood that a function performed by the user node in this embodiment may also be completed by the first shared node. In subsequent embodiments, meanings of "broadcast" and "send" are similar, and may be used together. This does not constitute a limitation on the technical solutions of this application.

S541: Obtain information about the external node.

In an embodiment, a shared node pool in each region periodically obtains information about an external node of a local region. The external node in this application refers to the external node obtained periodically.

Specifically, the information about the external node of the local region may be periodically obtained based on a blockchain browser, node public information, or a node discovery protocol. Some blockchain browsers provide IP address information of a node. IP address information of a part of nodes may be obtained by viewing node information on the blockchain browser. Some nodes may disclose IP address information of the nodes through an official website or a social media account. Some blockchain networks help nodes discover and connect to each other based on the node discovery protocol. IP address information of a part of nodes may be obtained by participating in the node discovery protocol.

S542: The user node and/or the first shared node send/sends the second data to a second shared node.

In an embodiment, a plurality of shared nodes are separately selected from each shared node pool to send the second data to the external node. The second shared node is a shared node located in a same region as the user node, and the second shared node is configured to send the second data to the external node.

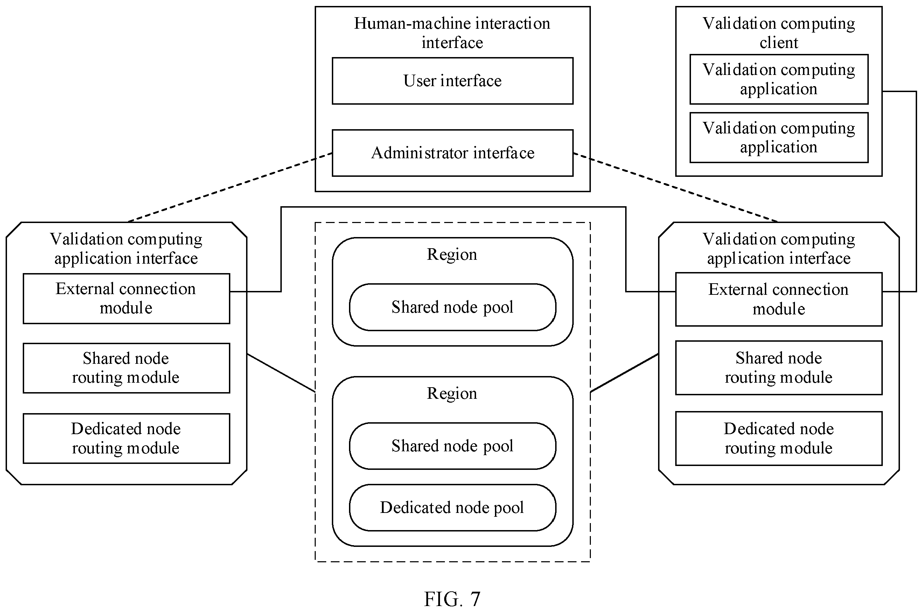

In another embodiment, as shown in FIG. 7, the validation computing application interface includes an external connection module, a shared node routing module, and a dedicated node routing module. Specifically, the external connection module is configured to receive the first data from the validation computing application, receive data from a VH, or send data to a VH. The shared node routing module is configured to send the first data or the second data to a shared node. The dedicated node routing module is configured to send the first data to a user node, or receive the second data sent by a user node.

Further, the administrator of the blockchain validation service management system may configure parameters of the foregoing modules through the human-machine interaction interface.

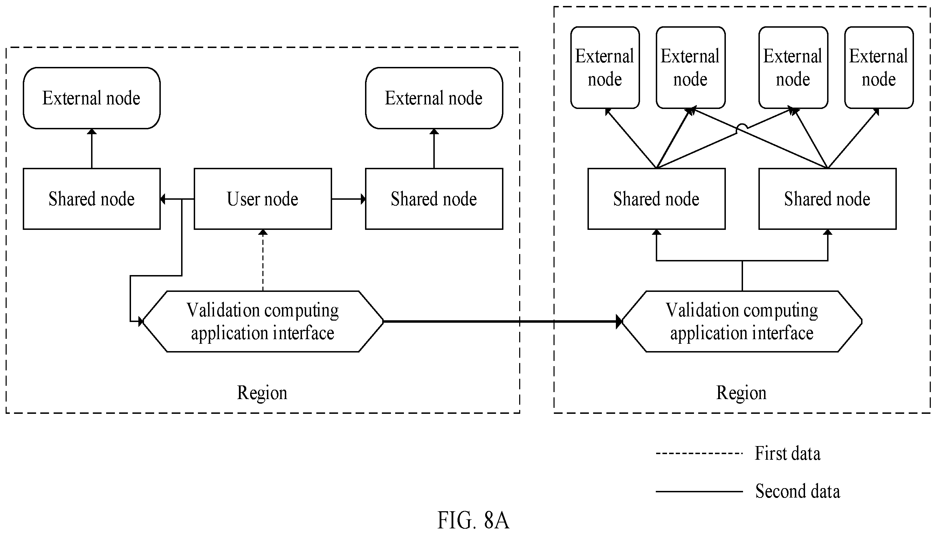

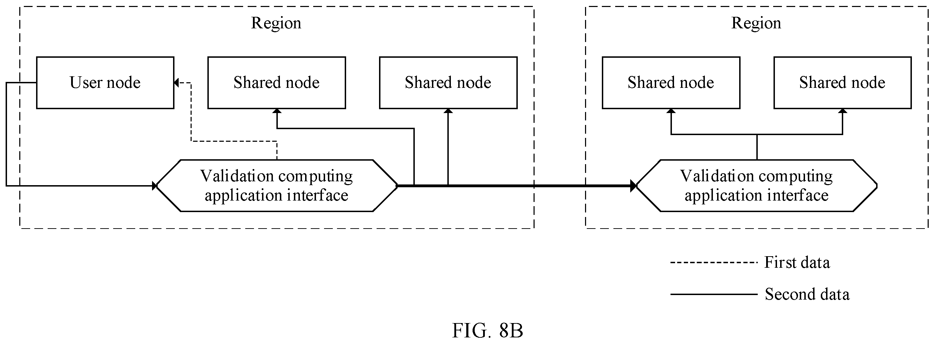

The user node needs to send the second data to the second shared node, so that the second shared node broadcasts the second data to the external node. First, a procedure in which the user node sends the second data to the second shared node is described with reference to a schematic flowchart shown in FIG. 8A and FIG. 8B.

In some embodiments, as shown in FIG. 8A, the user node sends the second data to the second shared node, and the second shared node sends the second data to the external node.

In such an implementation, the user node may broadcast the second data in the local region through the shared node in the same region.

In some embodiments, as shown in FIG. 8B, the second validation computing application interface receives the second data from the user node, and sends the second data to a plurality of second shared nodes.

With reference to FIG. 8A and FIG. 8B, a procedure in which the user node sends the second data to a third shared node is described. The third shared node is a shared node located in a different region from the user node, and the third shared node is configured to send the second data to the external node. In some embodiments, as shown in FIG. 8A, a third validation computing application interface receives the second data from the second validation computing application interface, and separately sends the second data to the third shared node in the region to which the target blockchain node belongs. The third validation computing application interface is a validation computing application interface located in a different region from the second validation computing application interface.

In some embodiments, if there is no third shared node in a part of regions, the second shared node sends the second data to external nodes in these regions.

In such an implementation, the user node can fully utilize network performance between a plurality of validation computing application interfaces to broadcast the second data to the plurality of shared nodes, thereby reducing a delay of internally broadcasting the second data.

In some embodiments, no VH is disposed in the blockchain validation service management system, and the user node may directly broadcast the second data to all second shared nodes.

S543: The second shared node sends the second data to the external node.

In some embodiments, as shown in FIG. 8A, one second shared node sends the second data to a plurality of external nodes located in a same region as the second shared node. In some other embodiments, one second shared node sends the second data to a plurality of external nodes located in any region.

In this implementation, the shared node is configured to broadcast validation data to an external blockchain node, thereby increasing a broadcast coverage area, reducing a broadcast delay, reducing traffic consumption of the user node, and significantly improving a success rate of executing a validation computing task by the user node.

S544: The user node sends the second data to the external node.

In some embodiments, the user node directly sends the second data to the external node. When a large quantity of shared nodes in a part of regions are in an unavailable state due to a fault, a network attack, or the like, the user node may still send the second data to external nodes in these regions based on the obtained information about the external node.

In the blockchain validation service management system provided in this embodiment of this application, a shared node pool including a plurality of shared nodes is pre-created and deployed in a plurality of regions. The shared node is configured to accelerate creation of a user node, and temporarily replace an unavailable user node to perform a validation computing service. The shared node is further configured to broadcast validation data to an external blockchain node, to increase a broadcast coverage area, reduce a broadcast delay, and reduce traffic consumption of the user node. These two functions can significantly improve validity of user nodes in the blockchain.

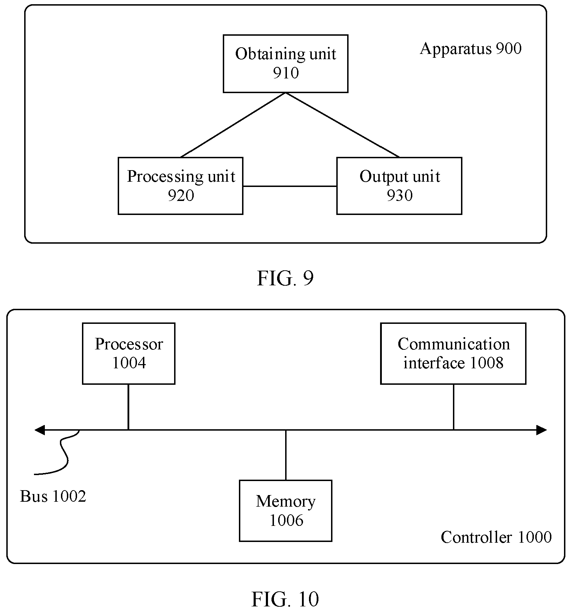

FIG. 9 is a block diagram of a blockchain validation service management apparatus according to an embodiment of this application. The apparatus 900 shown in FIG. 9 may be configured to perform the blockchain validation service management method in this application.

As shown in FIG. 9, the apparatus includes an obtaining unit 910, a processing unit 920, and an output unit 930. The term "unit" herein may be implemented in a form of software and/or hardware. This is not specifically limited.

For example, the "unit" may be a software program, a hardware circuit, or a combination thereof for implementing the foregoing functions, and may include code running on a compute instance. For example, the following uses the processing unit as an example to describe an implementation of the processing unit. Similarly, for implementations of the obtaining unit and the output unit, refer to implementations of the processing unit.

Specifically, the processing unit may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is set in one region. A communication gateway needs to be set in each VPC for communication between two VPCs in a same region or between VPCs in different regions. Interconnection between VPCs is implemented through the communication gateway.

The processing unit is used as an example of a hardware functional unit, and the processing unit may include at least one compute device, for example, a server. Alternatively, the processing unit may be a device implemented using an application-specific integrated circuit (application-specific integrated circuit, ASIC) or a programmable logic device (programmable logic device, PLD) or the like. The PLD may be implemented by using a complex programmable logic device (complex programmable logical device, CPLD), a field-programmable gate array (field-programmable gate array, FPGA), generic array logic (generic array logic, GAL), or any combination thereof.

A plurality of compute devices included in the processing unit may be distributed in a same region, or may be distributed in different regions. The plurality of compute devices included in the processing unit may be distributed in a same AZ, or may be distributed in different AZs. Similarly, the plurality of compute devices included in the processing unit may be distributed in a same VPC, or may be distributed in a plurality of VPCs. The plurality of compute devices may be any combination of compute devices such as a server, an ASIC, a PLD, a CPLD, an FPGA, and GAL.

Therefore, modules in the examples described in the embodiments of this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

This application further provides a controller 1000. As shown in FIG. 10, the controller 1000 includes a processor 1004 and a communication interface 1008. Further, the controller 1000 may further include a bus 1002 and a memory 1006. It should be understood that the bus 1002 and the memory 1006 are optional. The processor 1004, the memory 1006, and the communication interface 1008 communicate with each other through the bus 1002. For example, the controller 1000 may be a compute device or an apparatus that is in a compute device and that is configured to implement the method in the embodiment of this application. The controller 1000 may be a server or a terminal device. It should be understood that quantities of processors and memories in the controller 1000 are not limited in this application.

The bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 10, but this does not mean that there is only one bus or only one type of bus. The bus 1002 may include a path for information transmission between various components (for example, the memory 1006, the processor 1004, and the communication interface 1008) of the controller 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The memory 1006 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1006 stores executable program code, and the processor 1004 executes the executable program code to separately implement functions of the foregoing obtaining unit and processing unit, to implement the blockchain validation service management method. In other words, the memory 1006 stores instructions used to perform the blockchain validation service management method.

The communication interface 1008 uses a transceiver module, for example, but not limited to, a network interface card or a transceiver, to implement communication between the controller 1000 and another device or communication network (for example, a plurality of servers). The communication interface may also be referred to as an interface circuit.

An embodiment of this application further provides a compute device cluster. The compute device cluster includes the controller 1000 and a plurality of compute devices. The compute device may be a server, for example, a central server, an edge server, or a local server in a local data center. In some embodiments, the compute device may alternatively be a terminal device, for example, a desktop computer, a notebook computer, or a smartphone. The plurality of compute devices may be the plurality of servers described above. The compute device cluster may be configured to implement a blockchain validation service management system.

In a possible implementation, the controller 1000 is one of the plurality of compute devices or an apparatus that is in the compute device and that is configured to implement the foregoing method.

In another possible implementation, the controller 1000 is another compute device other than the plurality of compute devices or an apparatus that is in another compute device and that is configured to implement the foregoing method.

An embodiment of this application further provides a computer program product including instructions. The computer program product may be software or a program product that includes the instructions and that can run on a compute device or can be stored in any usable medium. When the computer program product is run on at least one compute device, the at least one compute device is enabled to perform the method in embodiments of this application.

An embodiment of this application further provides a computer-readable storage medium. The computer-readable storage medium may be any usable medium accessible by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a compute device to perform the method in embodiments of this application, or instruct the compute device to perform the method in embodiments of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with units and algorithm steps of the examples described in embodiments disclosed in this specification, this application may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in a form of a software function unit and sold or used as an independent product, the functions may be stored in a computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A blockchain validation service management method, wherein the blockchain comprises a plurality of blockchain nodes, the method is applied to a blockchain validation service management system, the blockchain validation service management system comprises a plurality of shared nodes and a plurality of dedicated nodes, the shared nodes and the dedicated nodes are used as blockchain nodes, and the shared nodes store synchronization data of the blockchain; and
the method comprises:
receiving a user node creation request from a first user, and creating at least one dedicated node based on data of a first shared node in the plurality of shared nodes, wherein the at least one dedicated node is used as a user node of the first user;
receiving first data from a validation computing application of the first user;
generating second data based on the first data, wherein the second data comprises the first data, an identifier of the first user, and an identifier of the user node; and
sending the second data to the plurality of blockchain nodes.

2. The method according to claim 1, wherein generating the second data based on the first data comprises:
in a process in which the second data is generated, if the user node is available, generating, by the user node, the second data based on the first data.

3. The method according to claim 1 or 2, wherein generating the second data based on the first data comprises:
in the process in which the second data is generated, if there is a first period in which the user node is unavailable, generating, by the first shared node, one part of the second data based on the first data in the first period; and
in a second period in which the user node is available, generating, by the user node, another part of the second data based on the first data, wherein the second data comprises the first data, the identifier of the first user, the identifier of the user node, and an identifier of the first shared node.

4. The method according to claim 3, wherein that the user node is unavailable comprises:
the user node is in a creation process, or the user node is in an upgrade and maintenance process.

5. The method according to any one of claims 1 to 4, wherein the blockchain validation service management system further comprises a validation computing application interface, and receiving the first data from the validation computing application of the first user comprises:
receiving, by the validation computing application interface, the first data from the validation computing application; and
the method further comprises:
if the user node is available, sending, by the validation computing application interface, the first data to the user node; or
if the user node is unavailable, sending, by the validation computing application interface, the first data to the first shared node.

6. The method according to any one of claims 1 to 5, wherein the plurality of shared nodes are deployed in a plurality of regions, and sending the second data to the plurality of blockchain nodes comprises:
sending the second data to a second shared node, wherein the second shared node is a shared node located in a same region as the user node; and
sending, by the second shared node, the second data to the plurality of blockchain nodes.

7. The method according to claim 6, wherein sending, by the second shared node, the second data to the plurality of blockchain nodes comprises:
sending, by the second shared node, the second data to a third shared node in a region to which a target blockchain node belongs; and
sending, by the third shared node, the second data to the target blockchain node.

8. The method according to claim 6 or 7, wherein the blockchain validation service management system further comprises the validation computing application interface, and sending, by the second shared node, the second data to the plurality of blockchain nodes comprises:
sending, by the second shared node, the second data to the plurality of blockchain nodes through the validation computing application interface.

9. The method according to any one of claims 1 to 8, wherein the blockchain validation service management system further comprises a human-machine interaction interface, the human-machine interaction interface is configured to deploy the plurality of shared nodes and the plurality of dedicated nodes, and the method comprises:
receiving, by the human-machine interaction interface, the user node creation request from the first user; and
outputting a creation success response to the first user when creation of the user node is completed.

10. A blockchain validation service management system, wherein the blockchain comprises a plurality of blockchain nodes, the blockchain validation service management system comprises a plurality of shared nodes and a plurality of dedicated nodes, the shared nodes and the dedicated nodes are used as blockchain nodes, and the shared nodes store synchronization data of the blockchain; and
the blockchain validation service management system is configured to:
receive a user node creation request from a first user, and create at least one dedicated node based on data of a first shared node in the plurality of shared nodes, wherein the at least one dedicated node is used as a user node of the first user;
receive first data from a validation computing application of the first user;
generate second data based on the first data, wherein the second data comprises the first data, an identifier of the first user, the identifier of the first user, and an identifier of the user node; and
send the second data to the plurality of blockchain nodes.

11. The blockchain validation service management system according to claim 10, wherein in a process in which the second data is generated, if the user node is available, the user node is configured to generate the second data based on the first data.

12. The blockchain validation service management system according to claim 10 or 11, wherein
in the process in which the second data is generated, if there is a first period in which the user node is unavailable, the first shared node is configured to generate one part of the second data based on the first data in the first period; and
in a second period in which the user node is available, the user node is configured to generate another part of the second data based on the first data, wherein the second data comprises the first data, the identifier of the user node, and an identifier of the first shared node.

13. The blockchain validation service management system according to claim 12, wherein that the user node is unavailable comprises:
the user node is in a creation process, or the user node is in an upgrade and maintenance process.

14. The blockchain validation service management system according to any one of claims 10 to 13, further comprising a validation computing application interface, wherein the validation computing application interface is configured to:
receive the first data from the validation computing application; and
if the user node is available, send the first data to the user node; or
if the user node is unavailable, send the first data to the first shared node.

15. The blockchain validation service management system according to claim 14, wherein the plurality of shared nodes are deployed in a plurality of regions;
the user node and/or the first shared node are/is configured to send the second data to a second shared node, wherein the second shared node is a shared node located in a same region as the user node; and
the second shared node is configured to send the second data to the plurality of blockchain nodes.

16. The blockchain validation service management system according to claim 14 or 15, wherein
the second shared node is configured to send the second data to a third shared node in a region to which a target blockchain node belongs; and
the third shared node is configured to send the second data to the target blockchain node.

17. The blockchain validation service management system according to any one of claims 14 to 16, further comprising the validation computing application interface, wherein the second shared node is configured to send the second data to the plurality of blockchain nodes through the validation computing application interface.

18. The blockchain validation service management system according to any one of claims 10 to 17, further comprising a human-machine interaction interface, wherein the human-machine interaction interface is configured to:
deploy the plurality of shared nodes and the plurality of dedicated nodes; and
output a creation success response to the first user when creation of the user node is completed.

19. A compute device cluster, comprising at least one compute device, wherein each compute device comprises a processor and a memory; and
the processor of the at least one compute device is configured to execute instructions stored in the memory of the at least one compute device, to enable the compute device cluster to perform the method according to any one of claims 1 to 9.

20. A computer-readable storage medium, comprising computer program instructions, wherein when the computer program instructions are executed by a blockchain validation service management system, the blockchain validation service management system is enabled to perform the method according to any one of claims 1 to 9.

21. A computer program product, wherein when the computer program product is run on a blockchain validation service management system, the blockchain validation service management system is enabled to perform the method according to any one of claims 1 to 9.
